# FASCICULE DE BREVET EUROPEEN

(11) **EP 0 544 577 B1**
(45) Date de publication et mention de la délivrance du brevet: **28.05.1997**
(21) Numéro de dépôt: 92403148.7
(22) Date de dépôt: 24.11.1992
(51) Int. Cl.: C03C 17/34

(54) **Produit à substrat en verre muni d'une couche à basse émissivité**
Glassubstrat mit einer Beschichtung mit niedrigem Emissionsvermögen
Glass substrate coated with a low emissivity coating

(30) Priorité: 26.11.1991 FR 9114569
(43) Date de publication de la demande: 02.06.1993
(73) Titulaire: SAINT-GOBAIN VITRAGE, 92400 Courbevoie (FR)
(72) Inventeur: Zagdoun, Georges M., F-92250 La Garenne Colombes (FR); Balian, Pierre, F- 75015 Paris (FR)
(74) Mandataire: Muller, René

(56) Documents cités:
- EP-A- 0 114 282
- EP-A- 0 441 705
- FR-A- 2 005 224
- FR-A- 2 439 167
- GB-A- 2 136 316

## Description

La présente invention concerne un produit comportant un substrat en verre portant une couche mince d'oxyde métallique, présentant tout particulièrement des propriétés de basse émissivité, de faible résistivité et de transparence.

Elle concerne également les procédés pour l'obtenir, en particulier utilisant les techniques de pyrolyse à partir de dérivés métalliques ou utilisant le vide, ainsi que les applications d'un tel produit.

Ce type de produit est en effet très intéressant quant à ses applications, tout particulièrement dans le domaine du bâtiment : un substrat en verre revêtu d'une couche dite basse émissive utilisé pour former le vitrage d'une pièce permet de réduire l'émission dans l'infra-rouge lointain dudit vitrage, vers l'extérieur de la pièce. Cela permet d'améliorer le confort des habitants, notamment en hiver, en réduisant les pertes énergétiques dues pour une part à une fuite de ce rayonnement vers l'extérieur à travers le vitrage. Il est avantageusement associé à un autre substrat transparent par l'intermédiaire d'une lame de gaz, de manière à ce que la couche basse émissive soit en face 3 en comptant à partir de la face extérieure, pour former un double-vitrage isolant efficace.

On peut cependant aussi utiliser ce produit pour ses propriétés de faible résistivité de la couche, qui sont liées à sa basse émissivité, par exemple pour former des vitrages chauffants en prévoyant des arrivées de courant, notamment en tant que pare-brise ou lunette arrière chauffante dans une automobile.

De même, on peut utiliser ce produit dans des dispositifs opto-électroniques, notamment en tant qu'électrode transparente.

Les couches d'oxyde métallique présentant ces propriétés sont par exemple des couches d'oxyde d'indium dopé à l'étain (ITO), ou d'oxyde de zinc dopé à l'aluminium (ZnO:Al), à l'indium (ZnO:In), à l'étain (ZnO:Sn), ou au fluor (ZnO:F), ou d'oxyde d'étain dopé au fluor (SnO₂:F).

Ces couches d'oxyde métallique peuvent être obtenues par différents procédés : par des procédés sous vide (évaporation thermique, pulvérisation cathodique, éventuellement à l'aide de magnétron) ou par pyrolyse de composés organo-métalliques projetés par un gaz vecteur sous forme liquide, solide ou gazeuse sur la surface du substrat en verre chauffé à une température élevée mais néanmoins inférieure à sa température de ramollissement. Ceux-ci, mis ainsi en contact avec une surface chaude, se décomposent en s'oxydant pour former sur celle-ci une couche d'oxyde métallique. Cette dernière technique est tout particulièrement avantageuse dans la mesure où elle permet d'envisager des dépôts directement sur le ruban de verre d'une ligne de fabrication type float de manière continue.

Cependant, pour que ce type de couche fonctionnelle confère au substrat en verre des performances satisfaisantes en terme d'émissivité et/ou de résistance surfacique, il est nécessaire qu'elle présente une épaisseur suffisante, usuellement d'au moins 180 à 200 nm jusqu'à 400 nm. Cette épaisseur non négligeable, associée à un indice de réfraction sensiblement différent de celui du substrat en verre, conduit alors à des produits dont certaines caractéristiques photométriques peuvent poser un problème esthétique et/ou énergétique.

En effet, des couches d'environ 180 nm d'oxyde d'étain dopé à l'indium ITO ou d'oxyde d'étain dopé au fluor SnO₂:F sont nettement bleues en réflexion, tandis qu'elles sont plutôt vertes lorsque leur épaisseur est d'environ 360 nm.

Dans ce dernier cas, par exemple, une couche de SnO₂:F déposée sur un substrat de verre clair de 4 mm lui impose une valeur de réflexion lumineuse R_{L} "côté couche" supérieure à 10, voire à 15 %, et une pureté de couleur associée à cette réflexion pouvant dépasser 10 à 15 %, ce qui implique un aspect bien coloré et réfléchissant du substrat "côté couche" (c'est ce côté qui est en général installé en face 3 d'un double-vitrage posé dans un bâtiment, c'est donc lui qui est vu de l'extérieur lorsque l'on regarde la façade). On précise en effet que la valeur de la pureté indique l'intensité de la couleur : plus elle se rapproche de 0 %, plus elle paraît "lavée de blanc" et pastel. La couleur s'apprécie alors en relation avec la valeur de la réflexion lumineuse R_{L}.

Or, la tendance actuelle va plutôt vers une conception de vitrages, tout particulièrement ceux destinés au bâtiment, tendant à la neutralité en réflexion, notamment vus de l'extérieur. Et cette coloration en réflexion, de nature interférentielle, est d'autant plus gênante qu'elle peut varier en fonction de l'angle d'incidence de mesure, ce qui conduit à des façades équipées de tels vitrages offrant pour le spectateur extérieur un aspect inhomogène en couleur.

En outre, même si intrinsèquement une réflexion lumineuse R_{L} d'environ 15 % n'est pas considérable, elle signifie cependant une chute certaine de la quantité d'énergie solaire transmise, notamment à l'intérieur du local, et donc fait diminuer de quelques pourcents le facteur solaire, c'est-à-dire le rapport de la somme de l'énergie solaire transmise et de l'énergie solaire absorbée par le vitrage puis ré-émise vers l'intérieur du local, à l'énergie solaire incidente. Ceci est un inconvénient sur le plan énergétique, notamment lorsque l'on souhaite incorporer un tel substrat dans un double-vitrage isolant afin de faire baisser les coûts de chauffage.

Différentes études ont été menées pour résoudre en partie ces problèmes liés à l'utilisation d'une couche fonctionnelle unique, notamment pour diminuer l'effet réfléchissant ou pour atténuer la coloration en réflexion.

Il a été proposé (FR-A-2 542 728) de recouvrir la couche fonctionnelle d'un revêtement diélectrique, notamment à base d'oxyde de silicium SiO₂, d'épaisseur inférieure à 160 nm fonction de l'épaisseur de la couche fonctionnelle sous-jacente, et dont l'indice de réfraction est approximativement égal à la racine carrée de l'indice de réfraction de la couche fonctionnelle. Ce choix est dicté essentiellement dans le but d'augmenter le facteur de transmission lumineuse T_{L} et éventuellement de protéger la couche fonctionnelle de l'abrasion. Il n'y est donc pas question d'influence sur l'intensité de la coloration en réflexion, intensité qui est notamment traduite par la valeur de pureté pₑ.

Une autre possibilité à été envisagée : (FR-A-2 439 167) il s'agit cette fois d'insérer, entre le substrat en verre et la couche fonctionnelle, un revêtement intermédiaire qui peut être mono-, bi- ou multi-couche(s), dont la présence permet, d'après les auteurs, à la fois d'atténuer un effet de voile et des phénomènes d'irisations en réflexion, et même éventuellement de jouer le rôle de barrière à la migration d'ions alcalins contenus dans le substrat en verre. Dans le cas d'une mono-couche homogène, son indice de réfraction s'approche de la racine carrée du produit des indices de réfraction du substrat en verre et de la couche fonctionnelle, tandis que son épaisseur optique (le produit de son épaisseur par son indice de réfraction) est d'environ le quart de la longueur d'onde centrée sur 500 nm. Si tenter de supprimer des irisations (qui résultent, par définition, d'une non-uniformité de coloration en réflexion due à une variation dans l'épaisseur de la couche) en ajoutant un revêtement additionnel, ce qui est le but de FR-A-2 439 167, peut déboucher sur une diminution de la saturation globale de la coloration en réflexion, il reste néanmoins que ce document ne recherche ni ne mentionne un effet anti-réfléchissant.

Il est par ailleurs connu de la demande EP-A-0 441 705 un procédé de dépôt sur du verre d'une couche d'oxycarbure de silicium d'une épaisseur comprise entre 50 et 100 nm et d'un indice de réfraction compris entre 1,6 et 1,9, recouverte elle-même d'une couche conductrice à base d'oxyde métallique dopé.

De plus, aucun de ces documents n'évoque, et a fortiori ne chiffre, l'évaluation de l'influence de l'angle d'incidence sur l'aspect en réflexion, alors qu'il est de plus en plus souhaité, par exemple dans le bâtiment, que l'aspect extérieur global des vitrages équipant une façade élevée ne paraisse pas manquer d'uniformité selon l'angle de vision avec lequel ils sont observés.

Un but de l'invention est alors de concevoir un substrat en verre, muni d'une couche basse émissive à base d'oxyde métallique et qui pallie les lacunes précédemment mentionnées en présentant à la fois une valeur de réflexion lumineuse R_{L} côté couche modérée et une quasi-neutralité de la coloration en réflexion, même si l'angle d'incidence des mesures diffère de l'angle d'incidence normale habituellement choisi.

Un autre but de l'invention, éventuellement combiné au précédent consiste à proposer un même type de produit, présentant une valeur de facteur solaire améliorée.

L'invention a pour objet un substrat en verre muni d'une couche fonctionnelle transparente, conductrice et basse émissive d'indice de réfraction proche de 2 et à base d'oxyde(s) métallique(s) sur laquelle est déposé un revêtement « externe » dont l'épaisseur optique est d'environ le quart de la longueur d'onde moyenne appartenant au domaine visible, et de préférence centrée sur 550 nm. En outre, un revêtement « interne » est prévu entre couche fonctionnelle et substrat, ledit revêtement ayant une épaisseur optique comprise entre 50 et 75 nm.

De manière usuelle, la couche fonctionnelle présente un indice de réfraction n proche de 2 et une épaisseur comprise entre 200 et 400 nm, de préférence d'environ 360 nm.

Ladite couche fonctionnelle est avantageusement constituée par un oxyde métallique dopé tel que l'oxyde d'indium dopé à l'étain (ITO), l'oxyde d'étain dopé au fluor (SnO₂:F), l'oxyde de zinc dopé à l'indium (ZnO:In), au fluor (ZnO:F), à l'aluminium (ZnO:Al), ou à l'étain (ZnO:Sn).

Le revêtement interne présente de préférence un indice de réfraction inférieur à celui de la couche fonctionnelle et approximativement compris entre 1,75 et 1,90 ; son épaisseur physique est notamment de l'ordre de 30 à 50 nm, et de préférence est comprise entre 35 et 45 nm.

Deux types de revêtement remplissent avantageusement ces conditions.

Ainsi, on peut constituer un revêtement à base d'oxyde(s) métallique(s), et notamment au moins un de ceux appartenant au groupe suivant : l'oxyde d'aluminium, de titane, d'étain, de zinc, d'indium. On règle ainsi l'indice de réfraction en associant par exemple un oxyde à bas indice de réfraction tel que l'oxyde d'aluminium à au moins un oxyde à haut indice tel que l'oxyde de titane, étain, indium ou zinc, comme mentionné dans la demande de brevet francais FR-A-2 670 199.

Le deuxième type de revêtement interne qui répond à ces critères est un revêtement à base d'oxynitrure et/ou oxycarbure de silicium.

Quant au revêtement externe, il est choisi de manière à avoir un indice de réfraction inférieur à celui de la couche fonctionnelle, et notamment compris entre 1,40 et 1,65. Son épaisseur physique est avantageusement comprise entre 80 et 110 nm, de préférence entre 90 et 100 nm. Un tel indice de réfraction, relativement bas, est obtenu par exemple avec une couche à base d'oxyde de silicium.

L'intérêt essentiel du produit selon l'invention réside dans le fait de prévoir au moins deux revêtements entre lesquels est disposée la couche fonctionnelle. On peut alors optimiser les caractéristiques, essentiellement épaisseur optique, épaisseur physique et indice de réfraction, de chacun des revêtements de la couche fonctionnelle pour atteindre les buts recherchés, en s'offrant des possibilités de combinaison beaucoup plus vastes que dans le cas d'un seul revêtement, qu'il soit interne ou externe. En combinant les effets de ces revêtements, on acquiert ainsi une bonne maîtrise de l'aspect en réflexion du produit, sans pour autant amoindrir les propriétés inhérentes à la couche fonctionnelle.

On révèle ainsi un effet de « synergie » en quelque sorte de ces deux revêtements, et ceci de manière assez imprévisible. Ceci est tout particulièrement vrai concernant le choix des caractéristiques du revêtement interne, dont notamment l'épaisseur physique est très faible comparativement à celle de la couche fonctionnelle et dont l'indice de réfraction est inférieur à celui de la couche fonctionnelle mais néanmoins assez proche.

Ainsi, après sélection dans les gammes précitées des épaisseurs optiques, puis, en conséquence des indices de réfraction et des épaisseurs physiques des deux revêtements, un substrat monolithique selon l'invention présente, coté couches, une réflexion lumineuse R_{L} d'au plus 6 %, accompagnée d'une pureté de coloration en réflexion en incidence normale d'au plus 3 %. Il présente en outre une émissivité d'au plus 0,2.

Monté en double-vitrage de manière à ce que les couches soient en face 3, celui-ci présente une réflexion lumineuse un peu plus élevée, (mais restant inférieure à 15 % néanmoins) avec une pureté de coloration en réflexion encore abaissée en incidence normale, et même d'au plus 5 %, même à angle d'incidence de mesure usuellement considérée comme défavorable. Son facteur solaire en incidence normale atteint au moins 0,76.

De telles valeurs de R_{L} impliquent tout d'abord une suppression de l'essentiel de l'effet réfléchissant du vitrage, permettant d'augmenter globalement la valeur de la transmission énergétique T_{E} et donc le facteur solaire.

Quant aux valeurs de pureté de coloration en réflexion, en association avec les valeurs de R_{L}, elles donnent aux vitrages selon l'invention, qu'ils soient monolithiques ou montés en double-vitrages, un aspect très proche de la neutralité, même en choisissant un angle d'incidence généralement peu propice et différent de l'incidence normale. On s'assure ainsi d'une meilleure homogénéité d'aspect des vitrages d'une façade de bâtiment vus de l'extérieur.

Tout type de technique de dépôt peut être utilisé pour procéder au dépôt de la couche fonctionnelle et de ses revêtements. Notamment, au moins une des couches, lorsqu'elle est à base d'oxyde(s) métallique(s) peut être déposée par une technique utilisant le vide, notamment par pulvérisation cathodique, éventuellement réactive en présence d'oxygène, à partir de cibles en alliage métallique ou en céramique de compositions appropriées.

On peut aussi choisir, pour le dépôt d'au moins une des couches, une technique de pyrolyse, en phase gazeuse appelée également CVD (chemical vapor deposition), en phase liquide ou solide sous forme de poudres.

Ainsi, le revêtement "interne" peut être déposé par pyrolyse en phase gazeuse CVD à partir de précurseurs organo-métalliques ou siliciés, ou par pyrolyse de poudre à partir de précurseurs organo-métalliques.

La couche fonctionnelle peut aussi être aisément obtenue par pyrolyse. Ainsi, les couches de SnO₂:F et d'ITO peuvent être avantageusement obtenues par pyrolyse de poudres. On peut fabriquer les couches d'oxyde d'étain dopé au fluor à partir d'oxyde de dibutylétain (DBTO) en poudre et d'acide fluorhydrique anhydre gazeux, comme il est décrit dans le brevet FR-2 380 997, à partir de difluorure de dibutylétain (DBTF) éventuellement, en mélange avec du DBTO comme décrit dans le document EP-A-178 956 ou EP-A-039 256. En ce qui concerne les couches d'ITO, on peut les obtenir par exemple à partir de formiate d'indium et d'un composé de l'étain comme le DBTO décrit dans le document EP-A-192 009.

On peut aussi obtenir les couches semi-conductrices de SnO₂:F par pyrolyse en phase gazeuse, notamment à partir d'un mélange de composés d'étain comme (CH₃)₂ SnCl₂, (C₄H₉)₂ SnCl₂, Sn (C₂H₅)₄ et de composés organofluorés tels que CCl₂F₂, CHClF₂ et CH₃CHF₂ comme décrit dans la demande de brevet EP-A-027 403 ou bien encore à partir de monobutyl trichloroétain et un composé de formule XCHF₂ tel que le chlorodifluorométhane mentionné dans la demande de brevet EP-A-121 459.

Les couches d'oxyde de zinc dopé à l'indium ou à l'aluminium peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Les couches de SnO₂:F peuvent aussi être obtenues en phase liquide à partir d'acétylacétonate d'étain ou de diméthylétain-2-propionate dans des solvants organiques appropriés comme décrits notamment dans le brevet français 2 211 411.

Le revêtement externe est déposé de préférence par pyrolyse en phase gazeuse CVD à partir de précurseurs siliciés. Lorsqu'il est choisi afin d'avoir un indice de réfraction proche de 1,40 on peut avantageusement le déposer par plasma CVD également, comme décrit dans le brevet EP-B-230 188.

En outre, le revêtement interne ou externe, lorsqu'il est à base d'oxyde de silicium et éventuellement de carbone et/ou d'azote, peut également être déposé par plasma-CVD, technique utilisant le vide décrite dans la demande de brevet EP-A-413 617.

D'autres détails et caractéristiques avantageuses de l'invention ressortent de la description suivante d'exemples de réalisation non limitatifs.

On précise tout d'abord que tous les dépôts sont effectués sur un substrat en verre float silico-sodo-calcique clair de 4 mm d'épaisseur. Dans le cas d'un montage en double-vitrage, il est associé par l'intermédiaire d'une lame d'air de 12 mm d'épaisseur à un autre substrat similaire, clair et de 4 mm d'épaisseur, les couches se trouvent en face 3. Il va de soi que ce type de substrat n'est pas limitatif.

A des fins de comparaison, tous les exemples se réfèrent à une couche fonctionnelle présentant des caractéristiques identiques, c'est-à-dire une épaisseur de 360 nm et un indice de réfraction proche de 1,9. Elle est constituée de SnO₂:F et obtenue de manière connue par le spécialiste à partir de DBTF comme décrit dans les brevets précédemment mentionnés.

Le revêtement interne, lorsqu'il est constitué d'un mélange d'oxydes métalliques, est obtenu de manière connue par pyrolyse de poudre comme décrit notamment dans la demande de brevet EP-A-0 489 621.

Lorsqu'il est constitué d'un oxyde ou d'oxycarbure de silicium, il est obtenu par CVD, également de manière connue à partir de silane et d'un composé éthylénique, en adaptant par exemple l'enseignement de la demande de brevet EP-A-0 518 755. Il en est de même pour la revêtement « externe » à base d'oxyde de silicium.

Toutes les mesures spectrophotométriques ont été effectuées en référence à l'illuminant D₆₅.

Les abréviations utilisées dans les tableaux ont la signification suivante : R_{L} réflexion lumineuse (%) côté couche, T_{L} transmission lumineuse (%), FS facteur solaire, pₑ (O°) pureté de couleur en réflexion à incidence normale (%), et pₑ (20) et pₑ (40) cette même pureté mesurée à un angle d'incidence variant de 20 et 40 degrés de l'incidence normale. Toutes les épaisseurs e sont en nanomètres (nm).

### EXEMPLE 1

C'est l'exemple de référence, puisqu'il comporte un substrat muni uniquement de la couche fonctionnelle. Les caractéristiques du produit 1-a avec un substrat monolithique et du produit 1-b avec le substrat monté en double-vitrage sont indiquées ci-dessous :

| Exemple | R_{L} | FS | pₑ (0°) |
|---|---|---|---|
| 1-a | 17 | - | 15,0 |
| 1-b | 22,4 | 0,72 | 10,0 |

Son aspect en réflexion est donc coloré, de manière relativement soutenue, dans les verts.

### EXEMPLES 2 A 4

Les exemples 2 à 4 se réfèrent à un revêtement externe toujours identique : il s'agit d'un revêtement de 95 nm d'épaisseur et d'indice de réfraction 1,45 à base d'oxyde de silicium, obtenu par CVD à partir de composés siliciés de manière usuelle.

Par contre, on optimise les caractéristiques du revêtement interne (indice de réfraction et épaisseur).

### EXEMPLE 2

Le revêtement interne présente un indice de réfraction égal à 1,80 et d'une épaisseur de 37 nm. Il est à base d'un mélange d'oxydes d'aluminium et de zinc obtenus par pyrolyse de poudre de précurseurs en proportions adéquates, notamment à partir d'acétate de zinc et de triisopropylate d'aluminium dont 20 % en poids de ce dernier. Ces caractéristiques d'indice de réfraction et d'épaisseur ainsi que celles des exemples suivants sont également obtenues aisément avec des couches à base d'oxygène et de silicium, et éventuellement de carbone obtenus par CVD.

2-a correspond au substrat monolithique et 2-b au substrat monté en double-vitrage. Les résultats sont les suivants :

| Exemple | FS | R_{L} | p(O°) | p(20) | p(40) |
|---|---|---|---|---|---|
| 2-a | - | 4,5 | 1,12 | - | - |
| 2-b | 0,76 | 11,7 | 1,65 | 1,02 | 3,09 |

### EXEMPLE 3

Le revêtement interne présente une épaisseur de 30 nm et un indice de réfraction de 1,85. Il est à base d'un mélange d'oxydes d'aluminium et d'indium obtenu par pyrolyse de poudre de précurseurs dont 40 % en poids de formiate d'indium et 60 % en poids de triisopropylate d'aluminium, ou à base d'oxycarbure de silicium.

### EXEMPLE 4

Le revêtement interne présente un indice de réfraction de 1,75 et une épaisseur de 40 nm. Il est à base d'un mélange d'oxydes d'aluminium et d'étain, formé par pyrolyse de poudre contenant du difluorure de dibutylétain (DBTF) et du triisopropylate d'aluminium, dont 78 % en poids de ce dernier. On peut aussi choisir un oxycarbure de silicium.

Les caractéristiques obtenues pour ces exemples 3 et 4 en substrats monolithiques sont résumées dans le tableau ci-dessous :

| Exemple | T_{L} | R_{L} | p(0°) | e |
|---|---|---|---|---|
| 3 | 85,5 | 4,7 | 0,44 | 30 |
| 4 | 85,7 | 4,4 | 2,69 | 40 |

Il découle des exemples 2-a, 3 et 4 que l'on peut atteindre, en pureté de réflexion "côté couches" à incidence normale, des valeurs extrêmement faibles, notamment l'exemple 3, c'est-à-dire celui dont le revêtement a l'indice de réfraction le plus fort.

En outre, en comparant les exemples 1 et 2-b, on peut noter que le facteur solaire est sensiblement augmenté lorsque la couche fonctionnelle est munie de ses revêtements. L'exemple 2-b indique aussi que la pureté en double-vitrage, même à des angles d'incidence notablement différents de l'incidence normale, reste très faible, donc que l'on peut estimer quasiment homogène l'aspect extérieur de tels vitrages vus sous différents angles.

### EXEMPLES 5 A 6

Ces deux exemples conservent une même caractéristique de revêtement interne, soit une épaisseur de 45 nm et un indice de réfraction de 1,75, comme obtenu à l'exemple 4.

### EXEMPLE 5

Le revêtement externe présente un indice de réfraction de 1,45 et une épaisseur de 95 nm, il s'agit d'un oxyde de silicium obtenu par CVD comme précédemment mentionné.

### EXEMPLE 6

Le revêtement externe présente un indice de réfraction de 1,6 et une épaisseur de 85 nm. Il s'agit d'une couche à base d'oxygène, de silicium et éventuellement de carbone.

Les caractéristiques des deux exemples sont résumées dans le tableau ci-dessous :

| EXEMPLE | T_{L} | R_{L} | p(0°) |
|---|---|---|---|
| 5 | 85,8 | 4,3 | 2,79 |
| 6 | 84,4 | 5,9 | 1,60 |

Ces deux exemples laissent envisager une possibilité de compromis : en effet, plus la réflexion lumineuse R_{L} est faible, plus le facteur solaire est amélioré (exemple 5). Par contre, l'exemple 6, avec une R_{L} légèrement supérieure, présente une pureté presque deux fois moindre.

En conclusion, munir une couche fonctionnelle de deux revêtements, un sur chacune de ses faces, permet d'ouvrir largement le champ des investigations et d'effectuer des choix selon le but prioritaire en fonction de l'application recherché : une neutralité en réflexion, un meilleur facteur solaire ... C'est par une sélection des épaisseurs optiques de ces revêtements en relation avec les caractéristiques de la couche fonctionnelle que l'invention y parvient.

## Revendications

1. Produit comprenant un substrat en verre muni d'une couche fonctionnelle transparente, conductrice et basse émissive d'indice de réfraction proche de 2 et à base d'oxyde(s) métallique(s) dopé(s) sur laquelle est déposé un revêtement « externe » dont l'épaisseur optique est d'environ le quart de la longueur d'onde moyenne dans le domaine visible, et notamment centrée sur 550 nm, **caractérisé en ce qu'**un revêtement « interne » supplémentaire d'épaisseur optique comprise entre 50 et 75 nm est disposé entre couche fonctionnelle et substrat.

2. Produit selon la revendication 1, **caractérisé en ce que** la couche fonctionnelle est d'une épaisseur comprise entre 200 et 400 nm, de préférence d'environ 360 nm.

3. Produit selon l'une des revendications précédentes, **caractérisé en ce que** le revêtement « externe » présente un indice de réfraction inférieur à celui de la couche fonctionnelle, de préférence compris entre 1,40 et 1,65.

4. Produit selon l'une des revendications précédentes, **caractérisé en ce que** le revêtement « externe » présente une épaisseur physique comprise entre 80 et 110 nm, de préférence entre 90 et 100 nm.

5. Produit selon l'une des revendications précédentes, **caractérisé en ce que** le revêtement « interne » présente un indice de réfraction inférieur à celui de la couche fonctionnelle, de préférence compris entre 1,75 et 1,90.

6. Produit selon l'une des revendications précédentes, **caractérisé en ce que** le revêtement « interne » présente une épaisseur physique comprise entre 30 et 50 nm, de préférence entre 35 et 45 nm.

7. Produit selon l'une des revendications précédentes, **caractérisé en ce que** la couche fonctionnelle comporte au moins un oxyde métallique dopé appartenant au groupe comprenant l'oxyde d'indium dopé à l'étain ITO, l'oxyde de zinc dopé à l'indium ZnO:In, au fluor ZnO:F, à l'aluminium ZnO:Al ou à l'étain ZnO:Sn, l'oxyde d'étain dopé au fluor SnO₂:F.

8. Produit selon l'une des revendications précédentes, **caractérisé en ce que** le revêtement « interne » est composé d'au moins un des oxydes métalliques appartenant au groupe comprenant l'oxyde de titane, d'aluminium, de zinc, d'étain et d'indium.

9. Produit selon l'une des revendications 1 à 7, **caractérisé en ce que** le revêtement « interne » est composé d'un oxycarbure et/ou oxynitrure de silicium.

10. Produit selon l'une des revendications précédentes, **caractérisé en ce que** le revêtement « externe » est à base d'oxyde de silicium.

11. Produit selon l'une des revendications précédentes, **caractérisé en ce que** le substrat monolithique revêtu des revêtements de la couche fonctionnelle présente, « côté couches », une réflexion lumineuse R_{L} d'au plus environ 6% et une pureté de coloration en réflexion d'au plus 3% en incidence normale et une émissivité d'au plus environ 0,2.

12. Produit selon l'une des revendications précédentes, **caractérisé en ce qu**'il forme un double-vitrage associant à un autre substrat en verre le substrat muni de ses couches en face 3, ledit double-vitrage présentant un facteur solaire d'au moins 0,76, une pureté de couleur en réflexion d'au plus 5% à angle d'incidence variable.

13. Procédé d'obtention du produit conforme aux revendications précédentes, **caractérisé en ce qu**'au moins un des revêtements et/ou la couche fonctionnelle à base d'oxyde(s) métallique(s) est déposé par une technique utilisant le vide, en particulier par une technique de pulvérisation cathodique, éventuellement réactive en présence d'oxygène, à partir de cibles en alliage métallique ou en céramique de compositions appropriées.

14. Procédé d'obtention du produit conforme aux revendications 1 à 11, **caractérisé en ce qu**'au moins un des revêtements et/ou la couche fonctionnelle est déposé par une technique de pyrolyse.

15. Procédé d'obtention du produit conforme aux revendications précédentes, **caractérisé en ce que** l'on dépose le revêtement « interne » par évaporation chimique CVD de précurseurs organométalliques ou siliciés, ou par pyrolyse de poudre(s) de précurseurs organo-métalliques.

16. Procédé d'obtention du produit conforme aux revendications précédentes, **caractérisé en ce que** la couche fonctionnelle est déposée par une technique de dépôt par pyrolyse de poudre de précurseurs organo-métalliques.

17. Procédé d'obtention du produit conforme aux revendications précédentes, **caractérisé en ce que** le revêtement « externe » est déposé par une technique de dépôt par vaporisation chimique CVD de précurseurs siliciés.

## Claims

1. Product comprising a glass substrate having a low emissive, conductive, transparent functional layer with a refractive index close to 2 and based on doped metal oxide or oxides, on which is deposited an "external" coating, whose optical thickness is approximately a quarter of the mean wavelength in the visible range and in particular centred on 550 nm, characterized in that a supplementary, "internal" coating with an optical thickness between 50 and 75 nm is placed between the functional layer and the substrate.

2. Product according to claim 1, characterized in that the functional layer has a thickness between 200 and 400 nm, preferably approximately 360 nm.

3. Product according to one of the preceding claims, characterized in that the "external" coating has a refractive index lower than that of the functional layer and preferably between 1.40 and 1.65.

4. Product according to any one of the preceding claims, characterized in that the "external" coating has a physical thickness between 80 and 110 nm, preferably between 90 and 100 nm.

5. Product according to any one of the preceding claims, characterized in that the "internal" coating has a refractive index lower than that of the functional layer and preferably between 1.75 and 1.90.

6. Product according to one of the preceding claims, characterized in that the "internal" coating has a physical thickness between 30 and 50 nm and preferably between 35 and 45 nm.

7. Product according to one of the preceding claims, characterized in that the functional layer has at least one doped metal oxide belonging to the group including indium oxide doped with tin ITO, zinc oxide doped with indium ZnO:In, with fluorine ZnO:F, with aluminium ZnO:Al or with tin ZnO:Sn and tin oxide doped with fluorine SnO₂:F.

8. Product according to one of the preceding claims, characterized in that the "internal" coating is formed by at least one of the metal oxides belonging to the group including titanium, aluminium, zinc, tin and indium oxide.

9. Product according to one of the claims 1 to 7, characterized in that the "internal" coating is formed by silicon oxycarbide and/or oxynitride.

10. Product according to one of the preceding claims, characterized in that the "external" coating is based on silicon oxide.

11. Product according to one of the preceding claims, characterized in that the monolithic substrate coated with the coatings of the functional layer has on the "layer side" a light reflection R_{L} of at the most approximately 6% and a colour purity in reflection of at the most 3% in normal incidence and an emissivity of at the most approximately 0.2.

12. Product according to one of the preceding claims, characterized in that it forms a double glazing combining with another glass substrate, the substrate provided with its layers on face 3, said double glazing having a solar factor of at least 0.76, a colour purity in reflection of at the most 5% in the case of a variable incidence angle.

13. Process for obtaining the product according to the preceding claims, characterized in that at least one of the coatings and/or the functional layer based on metal oxide or oxides is deposited by a procedure using vacuum and in particular by optionally reactive, cathodic sputtering in the presence of oxygen, from metal alloy or ceramic targets having appropriate compositions.

14. Process for obtaining the product according to claims 1 to 11, characterized in that at least one of the coatings and/or the functional layer is deposited by a pyrolysis method.

15. Process for obtaining the product according to the preceding claims, characterized in that the "internal" coating is deposited by chemical vapour deposition (CVD) of organometallic or silicon precursors, or by the pyrolysis of organometallic precursor powder or powders.

16. Process for obtaining the product according to the preceding claims, characterized in that the functional layer is deposited by an organometallic precursor powder pyrolysis deposition method.

17. Process for obtaining the product according to the preceding claims, characterized in that the "external" coating is deposited by chemical vapour deposition (CVD) of silicon precursors.

## Patentansprüche

1. Erzeugnis, welches ein Glassubstrat umfaßt, das mit einer leitfähigen, transparenten funktionellen Schicht versehen ist, die ein niedriges Emissionsvermögen und einen Brechungsindex von etwa 2 besitzt, dotierte/s Metalloxid/e zur Grundlage hat und auf welcher eine "äußere" Beschichtung aufgebracht ist, deren optische Dicke etwa ein Viertel der mittleren Wellenlänge des sichtbaren Spektrums beträgt und insbesondere auf 550 nm Zentriert ist, **dadurch gekennzeichnet, daß** zwischen der funktionellen Schicht und dem Substrat eine zusätzliche "innere" Beschichtung mit einer optischen Dicke von 50 bis 75 nm angeordnet wird.

2. Erzeugnis nach Anspruch 1, **dadurch gekennzeichnet, daß** die Dicke der funktionellen Schicht 200 bis 400 nm und vorzugsweise etwa 360 nm beträgt.

3. Erzeugnis nach einem der vorhergehenden Ansprüche, **dadurch gekennzeichnet, daß** der Brechungsindex der "äußeren" Beschichtung kleiner als der der funktionellen Schicht ist und vorzugsweise 1,40 bis 1,65 beträgt.

4. Erzeugnis nach einem der vorhergehenden Ansprüche, **dadurch gekennzeichnet, daß** die geometrische Dicke der "äußeren" Beschichtung 80 bis 110 nm und vorzugsweise 90 bis 100 nm beträgt.

5. Erzeugnis nach einem der vorhergehenden Ansprüche, **dadurch gekennzeichnet, daß** der Brechungsindex der "inneren" Beschichtung kleiner als der der funktionellen Schicht ist und vorzugsweise 1,75 bis 1,90 beträgt.

6. Erzeugnis nach einem der vorhergehenden Ansprüche, **dadurch gekennzeichnet, daß** die geometrische Dicke der "inneren" Beschichtung 30 bis 50 nm und vorzugsweise 35 bis 45 nm beträgt.

7. Erzeugnis nach einem der vorhergehenden Ansprüche, **dadurch gekennzeichnet, daß** die funktionelle Schicht mindestens ein dotiertes Metalloxid enthält, das zu der Gruppe gehört, die mit Zinn dotiertes Indiumoxid, ITO, mit Indium, ZnO:In, Fluor, ZnO:F, Aluminium, ZnO:Al, oder Zinn, ZnO:Sn, dotiertes Zinkoxid und mit Fluor dotiertes Zinnoxid, SnO₂:F, umfaßt.

8. Erzeugnis nach einem der vorhergehenden Ansprüche, **dadurch gekennzeichnet, daß** die "innere" Beschichtung aus mindestens einem der Metalloxide besteht, die zu der Gruppe gehören, welche Titan-, Aluminium-, Zink-, Zinn- und Indiumoxid umfaßt.

9. Erzeugnis nach einem der Ansprüche 1 bis 7, **dadurch gekennzeichnet, daß** die "innere" Beschichtung aus Siliciumcarbidoxid und/oder -nitridoxid besteht.

10. Erzeugnis nach einem der vorhergehenden Ansprüche, **dadurch gekennzeichnet, daß** die "äußere" Beschichtung Siliciumdioxid zur Grundlage hat.

11. Erzeugnis nach einem der vorhergehenden Ansprüche, **dadurch gekennzeichnet, daß** das mit Beschichtungen aus der funktionellen Schicht überzogene Einscheibensubstrat auf der beschichteten Seite einen Lichtreflexionsgrad R_{L} von höchstens etwa 6 % und einen spektralen Farbanteil von höchstens 3 % unter senkrecht einfallendem Licht und einen Emissionskoeffizienten von höchstens etwa 0,2 aufweist.

12. Erzeugnis nach einem der vorhergehenden Ansprüche, **dadurch gekennzeichnet, daß** man mit ihm eine Doppelverglasung bildet, indem das mit seinen Schichten versehene Substrat als Seite 3 mit einem anderen Glassubstrat verbunden wird, wobei die Doppelverglasung einen Gesamtenergiedurchlaßgrad von mindestens 0,76 und einen spektralen Farbanteil unter einfallendem Licht von höchstens 5 % bei veränderlichem Einfallswinkel aufweist.

13. Verfahren zur Herstellung eines Erzeugnisses gemäß den vorhergehenden Ansprüchen, **dadurch gekennzeichnet, daß** wenigstens eine der Beschichtungen und/oder die funktionelle Schicht auf der Grundlage von Metalloxid/en durch ein Vakuumverfahren, insbesondere ein gegebenenfalls in Gegenwart von Sauerstoff reaktives Kathodenzerstäubungsverfahren, aus Targets aus einem Metallegierung oder Keramik mit geeigneter Zusammensetzung aufgebracht ist.

14. Verfahren zur Herstellung eines Erzeugnisses gemäß den Ansprüchen 1 bis 11, **dadurch gekennzeichnet, daß** wenigstens eine dar Beschichtungen und/oder die funktionelle Schicht durch ein Pyrolyseverfahren aufgebracht ist.

15. Verfahren zur Herstellung eines Erzeugnisses gemäß den vorhergehenden Ansprüchen, **dadurch gekennzeichnet, daß** die "innere" Beschichtung durch Gasphasenabscheidung, CVD, metallorganischer oder siliciumhaltiger Vorläufer oder durch Pyrolyse von Pulver/n aus metallorganischen Vorläufern aufgebracht wird.

16. Verfahren zur Herstellung eines Erzeugnisses gemäß den vorhergehenden Ansprüchen, **dadurch gekennzeichnet, daß** die funktionelle Schicht durch ein Abscheideverfahren mittels Pyrolyse von Pulver aus metallorganischen Vorläufern aufgebracht wird.

17. Verfahren zur Herstellung eines Erzeugnisses gemäß den vorhergebenden Ansprüchen, **dadurch gekennzeichnet, daß** die "äußere" Beschichtung durch ein Abscheideverfahren mittels Gasphasenabscheidung, CVD, siliciumhaltiger Vorläufer aufgebracht wird.
